# EUROPEAN PATENT APPLICATION

(11) **EP 0 882 741 A1**
(43) Date of publication of application: **09.12.1998**
(21) Application number: 97109216.8
(22) Date of filing: 06.06.1997
(51) Int. Cl.: C08F 4/24, C08F 10/00

(54) **Production of polyethylene**

(71) Applicant: FINA RESEARCH S.A., B-7181 Seneffe (Feluy) (BE)
(72) Inventor: Debras, Guy, 6210 Frasnes-lez-Gosselies (BE)

(57) **Abstract**

A process for producing polyethylene having increased isotropy of the tear properties of films made therefrom, the process comprising polymerising ethylene, or copolymerising ethylene and an alpha-olefinic comonomer comprising from 3 to 10 carbon atoms, in the presence of a catalyst system comprising a chromium-based catalyst which has a specific surface area of at least 400m²/g and a silica-containing support and has been subjected to a pretreatment process comprising dehydration to remove physically adsorbed water and subsequent titanation of the surface of the catalyst. There is further provided the use, for increasing the isotropy of the tear properties of films made from polyethylene resins, of a catalyst system for the production of the polyethylene resins by polymerisation of ethylene or copolymerisation of ethylene with an alpha-olefinic comonomer comprising from 3 to 10 carbon atoms, the catalyst system comprising a chromium-based catalyst having a specific surface area of at least 400m²/g, a silica-containing support and a titanated surface.

## Description

The present invention relates to a process for producing polyethylene having improved isotropic tear properties when made into films. The present invention further relates to the use of a catalyst system for producing such polyethylene.

Polyethylene is well known in the art for use in making films. Typically, polyethylene films are blown or extruded through a die. The blowing and extrusion of the thin film defines for the film a machine direction in the direction of blowing or extrusion through the die and an orthogonal transverse direction. For many applications, the polyethylene film is required to have a high tear strength, and in particular a high isotropy in the tear strength between the machine and transverse directions. As a result of the blowing or extrusion technique, the polyethylene polymer chains can become substantially aligned in the machine direction of the blowing or extrusion process. This can yield a significantly higher tearing strength in the transverse direction of the film as compared to the tearing strength in the machine direction. There is generally a need for polyethylene films having good tear properties for use in the manufacture of films, and in particular a good isotropy in the tear properties between the machine and transverse directions.

A variety of catalyst systems are known for the manufacture of polyethylene. It is known that the physical properties, in particular the mechanical properties, of a polyethylene resin can vary depending on what catalyst system was employed to make the polyethylene. This is because different catalyst systems tend to yield different molecular weight distributions in the polyethylene produced. Thus for example the properties of a polyethylene resin produced using a chromium-based catalyst (*i*.e. a catalyst known in the art as a "Phillips catalyst") tend to be different from the properties of a product employed using Ziegler-Natta catalyst. The production of polyethylene, in particular high density polyethylene (HDPE), using just a chromium-based catalyst is thus desirable to enable a particular polyethylene product to be manufactured.

For the manufacture of polyethylene films, it is known that HDPE resins made using Ziegler-Natta catalysts have a good balance in their tear properties between the machine and transverse directions. In particular, such resins made using Ziegler-Natta catalysts, and having what is known in the art as a bimodal molecular weight distribution, have good isotropic tear properties. Such a bimodal HDPE resin has a bimodal distribution of the molecular weight of the high density polyethylene which is represented in a graph of the molecular weight distribution as determined for example by gel phase chromatography. The graph includes in the curve a "shoulder" on the high molecular weight side of the peak of the molecular weight distribution. Such a bimodal high density polyethylene consists of high and low molecular weights fraction in which the mixture of those fractions is adjusted as compared to a monomodal distribution so as to increase the proportion of high molecular weight species in the polymer. This can in turn provide improved mechanical properties, and in particular improved isotropy in the tear properties of a polyethylene film. There is a need in the art for a process for producing polyethylene resins suitable for manufacture of films having good tear properties which do not employ a Ziegler-Natta catalyst, and in particular employ a chromium-based catalyst.

EP-A-0480376 discloses the production of bimodal polyethylene using a two catalyst mixture of a supported chromium catalyst and Ziegler-Natta type catalyst. Example (IV) of that specification discloses the manufacture of films. This process suffers from the disadvantage that the Ziegler-Natta catalyst requires a co-catalyst to give an active catalytic system but the co-catalyst can influence the supported chromium catalyst and in particular can detrimentally effect its activity. The applicant believes that the process disclosed in that prior patent specification has not been used commercially. Moreover, as is apparently from Table IV of EP-A-0480376, in particular the data given on runs 14 to 17, the tear resistance of the films was significantly higher in the transverse direction as compared to the machine direction, indicating a rather poor isotropy in the tear properties of the films.

It is known in the art to provide titanium in a chromium-based catalyst. Titanium can be incorporated either into the support for the chromium catalyst or into the catalytic composition deposited on the support.

Titanium can be incorporated into the support by coprecipitation or terprecipitation as is the case for cogel and tergel type catalysts developed by Phillips Petroleum. Cogel and tergel catalysts respectively have binary and ternary supports.

Alternatively, titanium can be incorporated into the support by impregnation of the support as described for example in US-A-4,402,864 or by chemisorption of a titanium compound into the support as described for example in US-A-4,016,343.

Titanation of the catalytic composition has been disclosed in earlier patent specifications.

US-A-4,718,703 discloses that titanium can be incorporated into the catalytic composition by adding to a composite liquid suspension, of a carrier material (*i.e.* a support) and chromium trioxide, a titanium compound of the formula Ti(OR)₄.

US-A-4,184,979 discloses that titanium can be incorporated into the catalytic composition by adding at elevated temperature a titanium compound such as titanium tetraisopropoxide to a chromium-based catalyst which has been heated in a dry inert gas. The titanated catalyst is then activated at elevated temperature.

Accordingly, it is an aim of the present invention to provide a process for producing polyethylene using a chromium-based catalyst, with the resultant polyethylene resin being suitable for the manufacture of polyethylene films and in particular wherein the films have a good balance in their tear properties between the machine and transverse directions.

Accordingly, the present invention provides a process for producing polyethylene having increased isotropy of the tear properties of films made therefrom, the process comprising polymerising ethylene, or copolymerising ethylene and an alphaolefinic comonomer comprising from 3 to 10 carbon atoms, in the presence of a catalyst system comprising a chromium-based catalyst which has a specific surface area of at least 400m²/g and a silica-containing support and has been subjected to a pretreatment process comprising dehydration to remove physically adsorbed water and subsequent titanation of the surface of the catalyst.

Preferably, the dehydration is carried out by heating the catalyst at a temperature of at least 300°C in an atmosphere of dry, inert gas. Preferably the titanation is carried out by titanating the chromium-based catalyst at a temperature of at least 300°C in an atmosphere of dry, inert gas containing a titanium compound of the general formula selected from RₙTi(OR')ₘ and (RO)ₙ Ti(OR')ₘ wherein R and R' are the same or different and are a hydrocarbyl group containing from 1 to 12 carbon atoms, n is 0 to 3, m is 1 to 4 and m+n equals 4.

The present invention further provides the use, for increasing the isotropy of the tear properties of films made from polyethylene resins, of a catalyst system for the production of the polyethylene resins by polymerisation of ethylene or copolymerisation of ethylene with an alpha-olefinic comonomer comprising from 3 to 10 carbon atoms, the catalyst system comprising a chromium-based catalyst having a specific surface area of at least 400m²/g, a silica-containing support and a titanated surface.

Preferably, the titanated chromium-based catalyst has a titanium content of from 1 to 5 wt% based on the weight of the titanated catalyst.

The present invention is predicated on the surprising discovery of the present inventor that, in the production of polyethylene resins, a particular chromium-based catalyst having a minimum specific surface area of a silica-containing support and which has been dehydrated and the surface titanated prior to or during the process of the activation of the catalyst at elevated temperature, is able to improve the tear balance of a polyethylene film made from the polyethylene resin.

The chromium-based catalyst preferably comprises a chromium oxide catalyst having a silica support or a binary support comprising silica and another oxide *e.g.* alumina or titania. Such binary supports are known in the art as cogels. A particularly preferred chromium-based catalyst may comprise from 0.5 to 5 weight % chromium, preferably around 1 weight % chromium, based on the weight of the chromium-based containing catalyst. The chromium-based catalyst has a specific surface area of at least 400m²/g, and a volume porosity of greater than 1 cc/g preferably from 1 to 3 cc/g.

A particularly preferred chromium-based catalyst for use in the present invention comprises the catalyst sold in commerce under the trade name HA-30 by W.R. Grace & Co. This catalyst has a surface area of 450m²/g, a pore volume of around 1.5 cc/g and a chromium content of around 1 weight % based on the weight of the chromium-containing catalyst. The support comprises a silica support. Other preferred silica-supported catalysts comprise the catalysts sold in commerce under the trade names C25300 and C35300 by PQ Corporation. These catalysts have a specific surface area of 500m²/g and respective pore volumes of 2 and 3 cc/g. Another preferred catalyst with a silica support is sold in commerce by Crosfield Ltd. under the trade name EP32 and has a specific surface area of 450m²/g and a pore volume of 1.5 cc/g.

The chromium based catalyst is subjected to a pretreatment in order to dehydrate it by driving off physically adsorbed water from the silica or silica-containing support *i.e.* chemically adsorbed water in the form of hydroxide (-OH) groups bonded to the -Si-O- framework of the support need not be removed. The removal of physically adsorbed water avoids the formation of TiO₂ as a product from the reaction of water with the titanium compound subsequently introduced during the titanation procedure, as described below. The dehydration step is preferably carried out by heating the catalyst to a temperature of at least 300°C in a fluidised bed and in a dry inert atmosphere of, for example, nitrogen. The dehydration step is preferably carried out for 0.5 to 2 hours.

The dehydrated catalyst is then subjected to a titanation step at elevated temperature preferably in the fluidised bed, also in an inert atmosphere, in which a titanium-containing compound decomposes at the elevated temperature to deposit titanium onto the surface of the catalyst. The titanium compound may be of the formula RₙTi(OR')ₘ or (RO)ₙ Ti(OR')ₘ where R and R' are the same or different and can be any hydrocarbyl group containing 1 to 12 carbon atoms, n is 0 to 3, m is 1 to 4 and m+n equals 4. Preferably, the titanium compound is a titanium tetraalkoxide Ti(OR')₄ where R' can be an alkyl or a cycloalkyl group each having from 3 to 5 carbon atoms. The titanation is performed by progressively introducing the titanium compound into the stream of dry, inert non-oxidising gas described hereabove in the dehydration step, maintained at at least 300°C. Preferably, the titanium compound is pumped as a liquid into the reaction zone where it vaporised. This titanation step is controlled so that the titanium content of the resultant catalyst is preferably from 1 to 5% by weight, and preferably from 2 to 4 by weight, based on the weight of the titanated chromium-based catalyst. The total amount of titanium compound introduced into the gas stream is calculated in order to obtain the required titanium content in the resultant catalyst and the progressive flow rate of the titanium is adjusted in order to provide a titanation reaction period of 0.5 to 1 hour.

After the introduction of the titanium compound has been terminated at the end of the reaction period, the catalyst is flushed under the gas stream for a period of typically 0.75 hours.

The dehydration and titanation steps are performed in the vapour phase in a fluidised bed.

Without being bound by theory, it is believed that the titanium is chemically bonded to the -Si-O- framework of the support.

The catalyst is then subjected to an activation step in air at an elevated activation temperature. The activation temperature preferably ranges from 500 to 900°C, more preferably from 550 to 650°C, and is most particularly around 650°C. The activation step is preferably carried out for a period of at lest 6 hours.

In the preferred polymerisation process of the present invention, the polymerisation or copolymerisation process is carried out in the liquid phase, the liquid comprising ethylene, and where required an alpha-olefinic comonomer comprising from 3 to 10 carbon atoms, in an inert diluent. The comonomer may be selected from 1-butene, 1-pentene, 1-hexene, 4-methyl 1-pentene, 1-heptene and 1-octene. The inert diluent is preferably isobutane. The polymerisation or copolymerisation process is typically carried out at a temperature of from 90 to 110°C, more preferably from 90 to 94°C, and at a pressure of 20 to 42 bar, more preferably at a minimum pressure of around 24 bar.

Typically, in the polymerisation process, the ethylene monomer comprises from 0.5 to 8% by weight, typically around 6% by weight, of the total weight of the ethylene in the inert diluent. Typically, in the copolymerisation process, the ethylene monomer comprises from 0.5 to 6% by weight and the comonomer comprises from 0.5 to 3% by weight, each based on the total weight of the ethylene monomer and comonomer in the inert diluent. This can be used when lower activation temperatures for the catalyst have been employed.

A chemical reducing agent, such as a metal alkyl, may be introduced into the polymerisation reaction. The metal alkyl may comprise triethyl aluminium (TEAl) in an amount of around 0.5ppm by weight based on the weight of the inert diluent. This can be used when lower activation temperatures for the catalyst have been employed.

The activated and titanated catalyst for use in the process of the invention is introduced into the polymerisation reactor. The alkylene monomer, and comonomer if present, are fed into the polymerisation reactor in the inert diluent and the polymerisation product of polyethylene is discharged from the reactor and separated from the diluent which can then be recycled.

The present invention will now be described with reference to the following non-limiting Examples.

### Examples 1 to 4

In order to demonstrate the process of the present invention in which a dehydrated titanated and activated chromium-based catalyst was employed, a number of runs to copolymerise ethylene to form high density polyethylene were performed. In each of the Examples, a liquid comprising ethylene, 1-hexene and the balance isobutane as an inert diluent was fed into a polymerisation reaction zone. Hydrogen was also fed into the reaction zone. The temperature in the reaction zone ranged from 90 to 94°C and the pressure ranged from 38 to 42 bars. In Example 4, a metal alkyl, in the form of triethyl aluminium (TEAl), was also introduced into the reaction zone as a reducing agent. Table 1 summarizes the processing conditions of Examples 1 to 4.

The catalyst system was also fed into the polymerisation reaction zone. In Examples 1 to 4, the chromium-based catalyst system comprised the catalyst sold in commerce by the company W.R. Grace & Co. under the trade name HA-30 which had been activated at an activation temperature of around 650°C. The catalyst had been dehydrated and then titanated prior to activation by mixing the catalyst which a titanium-containing compound comprising titanium tetraisopropoxide. In Examples 1 to 4, the percentage of titanium present in the catalyst comprised from 2 to 4 weight % based on the weight of the catalyst system.

The dehydration, titanation and activation steps were carried out as follows. The chromium-based catalyst was then introduced into an activator vessel incorporated a fluidised bed, flushed under nitrogen and the temperature was raised from room temperature to 300°C. The dehydration step was then carried out at this elevated temperature for 2 hours. After the dehydration step, titanium tetraisopropoxide, stored under anhydrous nitrogen, was progressively injected into the bottom of the activator vessel incorporating the fluidised bed. The amount of titanium tetraisopropoxide injected was calculated in order to give the required titanium content in the resultant catalyst and the flow thereof was adjusted in order to continue the injection to complete the desired level of titanation in around 30 minutes. After the injection was completed, the catalyst was flushed under nitrogen for around 45 minutes. Nitrogen was then progressively switched to air and the temperature was raised to the activation temperature of around 650°C for the subsequent activation step. In Example 4 a lower activation temperature of around 550°C was employed and the reactivity of the polymerisation process was enhanced by the addition of Teal to the reactants as specified in Table 1. In the activation step, the titanated chromium-based catalyst was maintained at the activation temperature for 6 hours. At the end of the activation step, the temperature was progressively decreased to 350°C. At continued cooling from 350°C to room temperature, the catalyst was flushed under nitrogen.

Table 1 also summarises the properties of pellets of the polyethylene resins produced in Examples 1 to 4 and also the properties of films of varying thickness produced from those polyethylene resins. For Examples 1 to 4, the high load melt index (HLMI) ranged from 11.8 to 15.1 g/10 and the melt index MI₂ ranged from 0.07 to 0.086 g/10 . The melt index MI₂ and the high load melt index HLMI were determined using the procedures of ASTM D 1238 using respective loads of 2.16kg and 21.6kg at a temperature of 190°C. The MI₂ and the HLMI are broadly inversely indicative of the molecular weight distribution of the polymer. The shear response for the polyethylene resins of Examples 1 to 4, being a ratio of the HLMI and the MI₂ values, ranged from 156 to 189. The density values for the polyethylene resins produced in accordance with Examples 1 to 4 are specified in Table 1 and range from 0.958 to 0.951g/cc.

The polyethylene resins of Examples 1 to 4 were processed to produce films having a thickness of 10 microns, 20 microns and 40 microns. Table 1 shows the tear properties of those films. The tear strengths are expressed in N/mm. The tear strength in the machine direction (MD) and the tear strength in the transverse direction (TD) were measured using the procedures of ASTM D1922. For each of the films, the ratio between the TD and MD values was calculated and these are specified in Table 1.

It will be seen from Table 1 that for each of the three film thicknesses employed in Examples 1 to 4 of 10, 20 and 40 microns, the TD/MD ratio is relatively low, being a maximum value of 5.7 for the 10 micron film of Example 1. This indicates a relatively good isotropy in the tear strength of the films. For example, it will be seen for 40 micron films of Examples 1 to 4 that the TD/MD ratio only ranges from a minimum value of 0.8 to a maximum value of 1.5, indicating a relatively high degree of isotropy in the tear strength in the machine and transverse directions.

### Comparative Example 1

In Comparative Example 1, the process of Examples 1 to 4 was repeated using the same chromium-based catalyst HA30 and using the same activation temperature of 650°C and using the same processing conditions in the polymerisation process. However, in Comparative Example 1 the chromium-based catalyst was not subject to titanation prior to the activation step. The equivalent properties of the polyethylene resins produced in Comparative Example 1, and the properties of the films produced from those resins, are shown in Table 1. It may be seen that the polyethylene resin produced in Comparative Example 1 has a significantly lower shear response of 96 as compared to the shear responses of the resins of Examples 1 to 4. This lower shear response value indicates reduced processability of the polyethylene resins. In addition, it may be seen that for each of the three film thicknesses of 10, 20 and 40 microns of Comparative Example 1, the TD/MD ratio is significantly higher for any given film thickness than for each of Examples 1 to 4. This demonstrates that the use of a titanated catalyst during activation significantly and unexpectedly improves the isotropy in the tear properties of a polyethylene film.

### Comparative Examples 2 and 3

Comparative Examples 2 and 3 demonstrate the typical properties of a polyethylene resin, and films having thickness of 20 and 40 microns produced therefrom, produced by a copolymerisation process using a Ziegler-Natta catalyst. It will be seen that the properties of the resins of Examples 1 to 4 are substantially similar to those of the resins produced using Ziegler-Natta catalysts. Moreover, it may be seen that the tear properties of the films, in particular the isotropy of the tear strength of the films in the machine and transverse directions, are substantially similar for the films of Examples 1 to 4 and as compared to those produced from the resins of Comparative Examples 2 and 3.

### Comparative Example 4

Comparative Example 4 demonstrates the typical properties of a polyethylene resin, and films having a thickness of 10,20 and 40 microns produced therefrom, produced by a copolymerisation process using a chromium-containing catalyst having a composite silica and titania support. In Comparative Example 4, the catalyst employed was that sold in commerce under the trade mark MAGNAPORE 963 by Grace GmbH, D-67545, Worms, Germany. This catalyst has an average pore radius of 190A, a pore volume of around 2.1 cc/g and a chromium content of around 1 wt% based on the weight of the chromium-containing catalyst. This catalyst contained 3 wt% titanium (in the titania in the support) based on the total weight of the catalyst. The catalyst was not subjected to a prior dehydration and titanation process before activation at around 550°C. It will be seen from Table 1 that for each of the film thicknesses employed the ratio of the tear strength in the transverse direction and the machine direction exhibited greater anisotropy than for the Examples in accordance with the invention.

Thus the present invention provides a process for making polyethylene resins which can be employed to produce films having good tear properties but with the process employing a chromium-based, as opposed to a Ziegler-Natta, catalyst.

**TABLE 1**

| | EXAMPLES | | | | COMPARATIVE EXAMPLES | | | |
|---|---|---|---|---|---|---|---|---|
| | 1 | 2 | 3 | 4 | 1 | 2 | 3 | 4 |
| CATALYST | HA-30 | HA-30 | HA-30 | HA-30 | HA-30 | Z-N | Z-N | 963 |
| % Ti | 2 | 4 | 4 | 4 | 0 | | | 3 |
| ACTIVATION Temp (°C) | 650 | 650 | 650 | 550 | 650 | | | 550 |

| PROCESS CONDITIONS | | | | | | | | |
|---|---|---|---|---|---|---|---|---|
| Temp (°C) | 90 | 93 | 90 | 94 | 103 | | | 89 |
| Alkyl (TEAl)(ppm) | 0 | 0 | 0 | 0.5 | 0 | | | 0 |
| Ethylene (kg/h) | 9.4 | 9 | 9 | 10 | 9 | | | 9 |
| Hexene (cc/h) | 748 | 495 | 705 | 945 | 549 | | | 612 |
| Hydrogen (Nl/h) | 0 | 0 | 0 | 0 | 80 | | | 0 |
| Isobutane (kg/h) | 26 | 26 | 26 | 26 | 26 | | | 26 |

| PELLET PROPERTIES | | | | | | | | |
|---|---|---|---|---|---|---|---|---|
| HLMI (g/10 ) | 15.1 | 13.4 | 11.8 | 13.5 | 12.5 | 6.3 | 9.5 | 14.7 |
| MI2 (g/10 ) | 0.08 | 0.086 | 0.07 | 0.082 | 0.13 | 0.037 | 0.05 | - |
| SHEAR RESPONSE | 189 | 156 | 169 | 165 | 96 | 170 | 190 | 107 |
| DENSITY (g/cc) | .949 | .951 | .949 | .948 | .950 | .948 | .956 | .950 |

| FILM PROPERTIES | | | | | | | | |
|---|---|---|---|---|---|---|---|---|
| 10µm | | | | | | | | |
| MD | 9 | 15 | 20 | 10 | 6.7 | | | 8 |
| TD | 51 | 25 | 26 | 41 | 116 | | | 136 |
| TD/MD ratio | 5.7 | 1.7 | 1.3 | 4.1 | 17.3 | | | 17 |

| 20µm | | | | | | | | |
|---|---|---|---|---|---|---|---|---|
| MD | 16 | 20 | 30 | 19 | 9.8 | 13 | 23 | 7 |
| TD | 50 | 30 | 36.2 | 50 | 90 | 52 | 43 | 136 |
| TD/MD ratio | 3.1 | 1.5 | 1.2 | 2.6 | 9.2 | 4 | 2 | 19.4 |

| 40 µm | | | | | | | | |
|---|---|---|---|---|---|---|---|---|
| MD | 23 | 30 | 38.9 | 29 | 7.6 | 22 | 19 | 16 |
| TD | 35 | 23.5 | 30.1 | 36 | 33 | 51 | 25 | 76 |
| TD/MD ratio | 1.5 | 0.8 | 0.8 | 1.2 | 4.3 | 2.5 | 1.2 | 4.8 |

| | | | | | | | | |
|---|---|---|---|---|---|---|---|---|
| * Z-N = Ziegler-Natta | | | | | | | | |
| * 963 = Magnapore 963 | | | | | | | | |

## Claims

1. A process for producing polyethylene having increased isotropy of the tear properties of films made therefrom, the process comprising polymerising ethylene, or copolymerising ethylene and an alpha-olefinic comonomer comprising from 3 to 10 carbon atoms, in the presence of a catalyst system comprising a chromium-based catalyst which has a specific surface area of at least 400m²/g and a silica-containing support and has been subjected to a pretreatment process comprising dehydration to remove physically adsorbed water and subsequent titanation of the surface of the catalyst.

2. A process according to claim 1 wherein the dehydration is carried out by heating the catalyst at a temperature of at least 300°C in an atmosphere of dry, inert gas.

3. A process according to claim 1 wherein the titanation is carried out by titanating the chromium-based catalyst at a temperature of at least 300°C in an atmosphere of dry, inert gas containing a titanium compound of the general formula selected from RₙTi(OR')ₘ and (RO)ₙ Ti(OR')ₘ wherein R and R' are the same or different and are a hydrocarbyl group containing from 1 to 12 carbon atoms, n is 0 to 3, m is 1 to 4 and m+n equals 4.

4. A process according to any one of claims 1 to 3 further comprising activating the titanated chromium-based catalyst at an activation temperature of from 500 to 900°C.

5. A process according to any foregoing claim wherein the titanated chromium-based catalyst has a titanium content of from 1 to 5 wt% based on the weight of the titanated catalyst.

6. A process according to any foregoing claim wherein the support comprises silica.

7. Use, for increasing the isotropy of the tear properties of films made from polyethylene resins, of a catalyst system for the production of the polyethylene resins by polymerisation of ethylene or copolymerisation of ethylene with an alpha-olefinic comonomer comprising from 3 to 10 carbon atoms, the catalyst system comprising a chromium-based catalyst having a specific surface area of at least 400m²/g, a silica-containing support and a titanated surface.

8. A catalyst system according to claim 7 wherein the titanated chromium-based catalyst has a titanium content of from 1 to 5 wt% based on the weight of the titanated catalyst.

9. A catalyst system according to claim 7 or claim 8 wherein the support comprises silica.
